(19) **Europäisches Patentamt / European Patent Office / Office européen des brevets**

(11) **EP 4 564 487 A1**

(12) **EUROPEAN PATENT APPLICATION**
published in accordance with Art. 153(4) EPC

(43) Date of publication:
04.06.2025 Bulletin 2025/23

(21) Application number: 23846635.3

(22) Date of filing: 27.07.2023

(51) International Patent Classification (IPC):
$H01M\ 8/0282^{(2016.01)}$    $C01B\ 33/42^{(2006.01)}$
$C09K\ 3/10^{(2006.01)}$    $C25B\ 13/05^{(2021.01)}$
$F16J\ 15/06^{(2006.01)}$    $H01M\ 8/0273^{(2016.01)}$
$H01M\ 8/0286^{(2016.01)}$    $H01M\ 8/12^{(2016.01)}$

(52) Cooperative Patent Classification (CPC):
C01B 33/42; C09K 3/10; C25B 13/05; F16J 15/06;
H01M 8/0273; H01M 8/0282; H01M 8/0286;
H01M 8/12; Y02E 60/50

(86) International application number:
PCT/JP2023/027638

(87) International publication number:
WO 2024/024905 (01.02.2024 Gazette 2024/05)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.07.2022 JP 2022120879

(71) Applicant: **Nichias Corporation**
**Tokyo 104-8555 (JP)**

(72) Inventors:
• **HARA, Ryota**
  **Tokyo 104-8555 (JP)**
• **MORIYASU, Ryosuke**
  **Tokyo 104-8555 (JP)**
• **OIKAWA, Jun**
  **Tokyo 104-8555 (JP)**

(74) Representative: **Mathys & Squire**
**The Shard**
**32 London Bridge Street**
**London SE1 9SG (GB)**

(54) **SHEET, SEALING MATERIAL, FUEL BATTERY, ELECTROLYTE CELL, METHOD FOR MANUFACTURING SHEET, AND METHOD FOR MANUFACTURING SEALING MATERIAL**

(57) Provided are a sheet and a sealing material that are based on clay and are excellent in an electrical insulating property in a high-temperature environment. A sheet, containing: a first component as a main component; and a second component optionally, in which the first component is clay, a diameter change rate is 10% or less, as thermal dimensional stability, when a weight of the entire sheet is 100% by weight, a content of iron oxide is 6% by weight or less, the second component is a filling material, when the weight of the entire sheet is 100% by weight, a sum of the first component and the second component is 90% by weight or more, and the first component : the second component = 20 : 80 to 100 : 0 is set, and a sealing material containing the sheet. In this case, the swelling clay is swelling muscovite, and in the swelling muscovite, at least a part of $K^+$ ions in an interlayer of the muscovite is exchanged with $Li^+$ ions. In addition, the second component is a filling material of clay or an oxide.

EP 4 564 487 A1

# FIG. 3

| | | | | Example 1 | Example 2 | Example 3 | Example 4 | Example 5 |
|---|---|---|---|---|---|---|---|---|
| Sample preparation | Type | First component | | LM7 | LM11 | LM20 | LM42 | LM42 |
| | | Second component | | — | — | — | — | M7 |
| | Ratio | First component | wt% | 100 | 100 | 100 | 100 | 75 |
| | | Second component | wt% | 0 | 0 | 0 | 0 | 25 |
| | Basis weight | | g/m² | 839 | 908 | 875 | 955 | 1023 |
| Evaluation result | | Handling | | Available | Available | Available | Available | Available |
| | Composition (XRF) | $SiO_2$ | wt% | 54.0 | 54.4 | 48.0 | 48.5 | 49.6 |
| | | $Al_2O_3$ | wt% | 38.8 | 37.5 | 36.7 | 39.1 | 37.2 |
| | | MgO | wt% | 0.7 | 0.7 | 0.4 | 0.6 | 0.6 |
| | | $Na_2O$ | wt% | n.d. | n.d. | 0.9 | 0.5 | 0.5 |
| | | $K_2O$ | wt% | 5.0 | 5.4 | 11.5 | 8.9 | 9.8 |
| | | $TiO_2$ | wt% | 0.2 | 0.4 | 0.3 | 0.3 | 0.4 |
| | | $Fe_2O_3$ | wt% | 0.9 | 1.3 | 1.9 | 2.0 | 1.7 |
| | | Others | wt% | 0.5 | 0.3 | 0.2 | 0.2 | 0.3 |
| | Compression restorability (20 MPa) | Density at 2 MPa | g/cm³ | 2.0 | 2.1 | 2.0 | 2.0 | 1.9 |
| | | Density at 20 MPa | g/cm³ | 2.4 | 2.5 | 2.5 | 2.5 | 2.4 |
| | | Density at 0.16 MPa after test | g/cm³ | 2.3 | 2.3 | 2.3 | 2.2 | 2.1 |
| | | Compression rate | % | 23 | 19 | 24 | 29 | 24 |
| | | Restoration rate | % | 7 | 6 | 9 | 11 | 12 |
| | Compression restorability (125 MPa) | Compression failure | | None | None | None | None | None |
| | Thermal dimensional stability | Diameter change rate | % | 1 | 1 | 1 | 1 | 1 |
| | Sealability | Leakage amount @ordinary temperature | mg /m/s | Within the range of $1 \times 10^{-3}$ to $10 \times 10^{-3}$ | \ | \ | Within the range of $1 \times 10^{-1}$ to $10 \times 10^{-1}$ | \ |
| Object attainment | As sheet | Not containing binder | | ○ | ○ | ○ | ○ | ○ |
| | | Low iron content (excellent in insulating property) | | ○ | ○ | ○ | ○ | ○ |
| | | Excellent in dimensional stability when heated at high temperature | | ○ | ○ | ○ | ○ | ○ |
| | As sealing material | No compression failure at 125 MPa | | ○ | ○ | ○ | ○ | ○ |
| | | High density when compressed (density at 20 MPa is 2.3-2.5 g/cm³) | | ○ | ○ | ○ | ○ | ○ |

# EP 4 564 487 A1

**Description**

TECHNICAL FIELD

The present invention relates to a sheet, a sealing material, a fuel battery, an electrolysis cell, a method for producing a sheet, and a method for producing a sealing material.

BACKGROUND ART

In an apparatus, a piping flange, and the like in various industries, a sealing material such as a gasket and a packing is used. As the gasket, a sheet gasket, a spiral-wound gasket, a serrated gasket, and the like are known.

In particular, in a gasket for a high temperature, a sheet containing clay as a main component is used. The clay sheet is sorted into a sheet using non-swellable clay and a sheet using swellable clay. Among them, in the sheet using the swellable clay of the related art or a sealing material using the sheet described above, vermiculite that is modified to swell (modified vermiculite) or the like is used as a raw material.

For example, in PATENT LITERATURE 1, a sheet containing modified vermiculite as swellable clay, and a sealing material using the sheet described above are described. In PATENT LITERATURE 2, a sealing material using a sheet containing modified vermiculite as swellable clay is described.

CITATION LIST

PATENT LITERATURE

PATENT LITERATURE 1: US 3325340
PATENT LITERATURE 2: JP 4745691 B2
PATENT LITERATURE 3: JP S58-9955 A
PATENT LITERATURE 4: WO 2017/115399 A
PATENT LITERATURE 5: JP 2015-535911 A
PATENT LITERATURE 6: JP H7-8724 B
PATENT LITERATURE 7: JP 6754746 B2
PATENT LITERATURE 8: JP 3855003 B2
PATENT LITERATURE 9: JP 3468747 B2
PATENT LITERATURE 10: JP 2007-254188 A
PATENT LITERATURE 11: JP 2017-71512 A

SUMMARY OF INVENTION

TECHNICAL PROBLEM

In a case where the clay sheet of the related art using the swellable clay is used as the sealing material, the following problems occur.

The modified vermiculite described in PATENT LITERATURES 1 and 2 can be a sheet without using a fiber and a binder, and has sealability in a high-temperature environment. However, the modified vermiculite contains a large amount of iron contents, and thus, conductivity is caused, and there is restriction on use in the vicinity of an electronic part and an electrode required to have an insulating property.

The present invention has been made in consideration of the insufficient electrical insulating property of the clay sheet of the related art in the high-temperature environment, and an object of the present invention is to provide a sheet and a sealing material that are based on clay and are excellent in an electrical insulating property in a high-temperature environment, a fuel battery and an electrolysis cell using the sealing material, a method for producing a sheet, and a method for producing a sealing material.

SOLUTION TO PROBLEM

As a result of intensive studies of the present inventors, it has been found that by drying slurry in which a solvent such as water is added to modified muscovite, a sheet excellent in an electrical insulating property in a high-temperature environment is obtained.

The present invention relates to a sheet, a sealing material, a fuel battery and an electrolysis cell using the sealing material, a method for producing a sheet, and a method for producing a sealing material described below.
[1] A sheet, containing

a first component as a main component,
in which the first component is clay,
a diameter change rate is 10% or less, as thermal dimensional stability, and
when a weight of the entire sheet is 100% by weight, a content of iron oxide is 6% by weight or less.

[2] The sheet according to [1] described above,

in which the sheet contains the first component, and a second component optionally,
the first component is swelling clay,
the second component is a filling material,
when the weight of the entire sheet is 100% by weight, a sum of the first component and the second component is 90% by weight or more, and
the first component : the second component = 20 : 80 to 100 : 0 is set.

[3] The sheet according to [1] described above,
in which the first component is swelling muscovite.
[4] The sheet according to [1] described above,
in which when the weight of the entire sheet is 100% by weight, a content of alumina is 16% by weight or more.
[5] The sheet according to [1] or [2] described above,

in which the swelling clay is swelling muscovite, and
in the swelling muscovite, at least a part of $K^+$ ions in an interlayer of the muscovite is exchanged with $Li^+$ ions.

[6] The sheet according to [2] described above,
in which the second component is a filling material of clay or an oxide.
[7] The sheet according to [2] described above,
in which in the second component, a volume-based cumulative 50% particle size ($D_{50}$) measured by a laser diffraction/scattering particle size distribution analyzer is 5 to 50 $\mu$m.
[8] The sheet according to [1] or [2] described above,
in which a content of a binder is 0.1% by weight or less.
[9] The sheet according to [1] or [2] described above,
in which when the weight of the entire sheet is 100% by weight, the content of the iron oxide is 3% by weight or less.
[10] A sealing material, including
the sheet according to any one of [1] to [9] described above.
[11] The sealing material according to [10] described above,
in which the sealing material is for a fuel battery or an electrolysis cell.
[12] A fuel battery or an electrolysis cell, including
the sealing material according to [11] described above.
[13] A method for producing the sheet according to any one of [1] to [9] described above, including
a step of mixing the first component and the second component to form a mixture.
[14] A method for producing a sealing material, including
a step of incorporating the sheet produced by the method for producing the sheet according to [13] described above as a part of a gasket or a packing.

ADVANTAGEOUS EFFECTS OF INVENTION

The sheet containing the clay that is the first component, for example, the swelling muscovite has a low iron content, compared to vermiculite-based and phlogopite-based sheets, and thus, has a high insulating property. In addition, sheet using the clay such as the swelling muscovite is not compounded with a fiber or a binder, and thus, has high sealability, and does not cause outgasing. Further, by adding the filling material, the restorability of the sheet is improved. Therefore, high heat resistance, high sealability, a reduction in the outgasing, and the control of the restorability (a high compression feature), which are not capable of being attained in the related art, can be attained.

BRIEF DESCRIPTION OF DRAWINGS

[FIG. 1] FIG. 1 is a diagram illustrating a particle size of muscovite used for modification, and a feature and a sheet appearance after modification.
[FIG. 2] FIG. 2 is a table showing a second component used.
[FIG. 3] FIG. 3 is a table showing sheets and sealing materials of Examples 1 to 5.
[FIG. 4] FIG. 4 is a table showing sheets and sealing materials of Examples 6 to 10.
[FIG. 5] FIG. 5 is a table showing sheets and sealing materials of Examples 11 to 14.
[FIG. 6] FIG. 6 is a table showing sheets and sealing materials of Comparative Examples 1 to 4.
[FIG. 7] FIG. 7 is a table showing a result of measuring volume resistivity.

DESCRIPTION OF EMBODIMENTS

Hereinafter, an embodiment of the present invention (hereinafter, this embodiment) will be described with reference to the drawings. This embodiment relates to a sheet, a sealing material, a method for producing a sheet, and a method for producing a sealing material.

<Definition>

In this specification, ○ to △ (for example, ○% by weight to △% by weight) indicates ○ or more and △ or less (○% by weight or more and △% by weight or less).
In addition, in this specification, the term "include" or "including" indicates including specified constituents, but does not exclude the presence of other constituents.

<Sheet>

A sheet of this embodiment, for example, can be used for a sealing material. The sheet of this embodiment contains a first component as a main component, and optionally contains a second component.

(First Component)

The first component is swelling clay, preferably swelling muscovite. Here, the "muscovite" is a concept including "sericite" that is another name in a case where the muscovite is fine particles. In addition, the swelling muscovite includes "swelling sericite" in a case where the swelling muscovite is fine particles. In the swelling muscovite, at least a part of $K^+$ ions in the interlayer of the muscovite is exchanged with at least one or more types of ions (ions imparting swellability) selected from the group consisting of $Li^+$ ions, $Ca^{2+}$ ions, and $Mg^{2+}$ ions. In the swelling sericite, at least a part of $K^+$ ions in the interlayer of the sericite is exchanged with at least one or more types of ions (ions imparting swellability) selected from the group consisting of $Li^+$ ions, $Ca^{2+}$ ions, and $Mg^{2+}$ ions.
The muscovite is one type of silicate mineral (phyllosilicate mineral), is represented by Chemical Formula $K_2Al_4$ $(Si_6 \cdot Al_2)O_{20}(OH)_4$, and has a triple structure containing Al and K between layers of a silicic acid tetrahedron. The sericite is fine particles of muscovite that is a layered silicate mineral. It is preferable that the muscovite used in this embodiment is not fluorine mica-type muscovite containing fluorine, from the viewpoint of preventing the generation of fluorine-based gas.
The swelling muscovite that is preferable as the first component can be obtained by exchanging at least a part of $K^+$ ions in the interlayer of the muscovite with ions such as $Li^+$ ions by modification. The modification of the muscovite is not particularly limited, and for example, can be performed by mixing lithium nitrate that is heated and melted with muscovite or sericite to react for a predetermined time. The dispersion of the swelling muscovite to water, for example, can be performed by removing the lithium nitrate with filtering and washing, and then, adding pure water, and stirring.
In the swelling muscovite, a ratio of $Li^+$ ions to $K^+$ ions contained in the interlayer is $Li^+:K^+ = 20$ at%:80 at% to 70 at%:30 at%, preferably $Li^+:K^+ = 30$ at%:70 at% to 60 at%:40 at%, more preferably $Li^+:K^+ = 40$ at%:60 at% to 60 at%:40 at%, and even more preferably $Li^+:K^+ = 40$ at%:60 at% to 55 at%:45 at%. The same ratio applies to a case where ions to be exchanged are not $K^+$ but $Ca^{2+}$ or $Mg^{2+}$.
When the weight of the entire sheet is 100% by weight, 90% by weight or more of the first component is contained. In addition, in a case where both of the first component and the second component are contained, at least 25% by weight or more, preferably 30% by weight or more, more preferably 50% by weight or more, even more preferably 60% by weight or more, particularly preferably 75% by weight or more, and more particularly preferably 80% by weight or more of the first component is contained when the total weight of the first component and the second component is 100% by weight. In addition, when the total weight of the first component and the second component is 100% by weight, at most 100% by weight or less, 90% by weight or less, 80% by weight or less, 70% by weight or less, 65% by weight or less, and 50% by weight or less of the first component is contained.

When the total weight of the first component and the second component is 100% by weight, 25 to 100% by weight, 30 to 100% by weight, 40 to 100% by weight, 50 to 100% by weight, 60 to 100% by weight, 65 to 100% by weight, 70 to 100% by weight, 75 to 100% by weight, 80 to 100% by weight, 25 to 95% by weight, 25 to 90% by weight, 25 to 80% by weight, 25 to 75% by weight, 25 to 70% by weight, 25 to 65% by weight, 25 to 60% by weight, and 25 to 50% by weight of the first component is contained.

In the first component, a volume-based cumulative 50% particle size ($D_{50}$) measured by a laser diffraction/-scattering particle size distribution analyzer is 5 to 500 $\mu$m, preferably 7 to 400 $\mu$m, more preferably 10 to 300 $\mu$m, even more preferably 10 to 250 $\mu$m, and particularly preferably 10 to 230 $\mu$m.

(Second Component)

The second component is a filling material, preferably a filling material of clay or an oxide. The second component is optionally contained in the sheet. Here, the filling material of the clay or the oxide is at least one or more types selected from the group consisting of muscovite, sericite, talc, kaolinite, and molten silica. Note that as the filling material, a calcined filling material can also be used.

When the total weight of the first component and the second component is 100% by weight, at least 10% by weight or more, preferably 20% by weight or more, more preferably 25% by weight or more, even more preferably 30% by weight or more, particularly preferably 40% by weight or more, and more particularly preferably 50% by weight or more of the second component is contained. In addition, when the total weight of the first component and the second component is 100% by weight, at most 75% by weight or less, 70% by weight or less, 65% by weight or less, 60% by weight or less, 55% by weight or less, and 50% by weight or less of the second component is contained. By changing the ratio of the second component, it is possible to adjust restorability to any state, but in a case where the ratio is excessively increased, a mechanical strength decreases.

When the total weight of the first component and the second component is 100% by weight, 0 to 75% by weight, 0 to 70% by weight, 0 to 60% by weight, 0 to 50% by weight, 0 to 40% by weight, 0 to 35% by weight, 0 to 30% by weight, 0 to 25% by weight, 0 to 20% by weight, 5 to 75% by weight, 10 to 75% by weight, 20 to 75% by weight, 25 to 75% by weight, 30 to 75% by weight, 35 to 75% by weight, 40 to 75% by weight, and 50 to 75% by weight of the second component is contained.

In the second component, a volume-based cumulative 50% particle size ($D_{50}$) measured by a laser diffraction/scattering particle size distribution analyzer is 5 to 500 $\mu$m, preferably 7 to 400 $\mu$m, more preferably 10 to 300 $\mu$m, even more preferably 10 to 250 $\mu$m, and particularly preferably 10 to 230 $\mu$m.

In the second component, a weight loss rate when heated to 1000°C is 15% by weight or less, preferably 13% by weight or less, more preferably 10% by weight or less, even more preferably 8% by weight or less, still even more preferably 7% by weight or less, and particularly preferably 6% by weight or less when the weight before heating is 100% by weight.

In the second component, the content of iron is small. Specifically, the content of iron in terms of iron oxide ($Fe_2O_3$) contained in the second component is 3% by weight or less, preferably 2% by weight or less, more preferably 1.5% by weight or less, even more preferably 1.0% by weight or less, still even more preferably 0.8% by weight or less, and particularly preferably 0.5% by weight or less. Here, the content of each component can be measured by fluorescent X-ray analysis (XRF) when notated in terms of oxide. Note that even in a case where the content of each component is notated in terms of oxide, it is not necessary that each component is contained as an oxide.

(Total Ratio of First Component and Second Component in Sheet)

When the weight of the entire sheet is 100% by weight, the sum of the first component and the second component is 90% by weight or more, preferably 92% by weight or more, more preferably 93% by weight or more, even more preferably 95% by weight or more, still even more preferably 96% by weight or more, and particularly preferably 97% by weight or more.

(Content Ratio of First Component to Second Component)

A ratio (a weight ratio) of the content of the first component : the content of the second component is 10 : 90 to 100 : 0, 15 : 85 to 100 : 0, 20 : 80 to 100 : 0, 25 : 75 to 100 : 0, 30 : 70 to 100 : 0, 40 : 60 to 100 : 0, 50 : 50 to 100 : 0, 60 : 40 to 100 : 0, 65 : 35 to 100 : 0, 70 : 30 to 100 : 0, 75 : 25 to 100 : 0, 80 : 20 to 100 : 0, 25 : 75 to 95 : 5, 25 : 75 to 90 : 10, 25 : 75 to 80 : 20, 25 : 75 to 75 : 25, 25 : 75 to 70 : 30, 25 : 75 to 65 : 35, 25 : 75 to 60 : 40, and 25 : 75 to 50 : 50.

<Method for Producing Sheet>

A method for producing a sheet of this embodiment includes a step of mixing the first component and the second component to form a mixture. A solvent such as water is added to the mixture, and the mixture is adjusted to slurry with an appropriate viscosity, in accordance with a molding method. Then, the mixture is molded by using extrusion molding, a calendering roll, a film applicator, a doctor blade, a bar coater, screen printing, and the like, and dried, and thus, the sheet can be obtained.

<Sealing Material>

The sheet of this embodiment can be used for a sealing material in various industries, a fuel battery such as a high-temperature fuel battery (SOFC), an electrolysis cell such as a solid oxide electrolysis cell (SOEC), and various pipes such as an exhaust conduit of an automobile, for example, a gasket, a packing, and the like. The sheet of this embodiment can also be used as the sealing material itself, or can also be used by being incorporated as a part of the sealing material such as a gasket or a packing. As the shape of the sealing material as a product, a sheet gasket, a spiral-wound gasket, a serrated gasket, and the like are exemplified, but the shape is not limited thereto.

(Binder-Free)

The sheet of this embodiment and the sealing material including the sheet described above do not substantially contain a binder. Here, the binder is not particularly limited, and examples thereof include rubber and a pressure-sensitive adhesive. More specifically, examples of the binder include acrylonitrile butadiene rubber, styrene butadiene rubber, polybutadiene rubber, silicone rubber, acrylic rubber, natural rubber, butyl rubber, chloroprene rubber, ethylene propylene rubber, fluorine rubber, urethane rubber, an acrylic pressure-sensitive adhesive, and a silicone-based pressure-sensitive adhesive.

Not substantially containing the binder indicates that when the total weight of the sheet is 100% by weight, the content of the binder contained is less than 0.1% by weight (0.1% by weight or less), preferably less than 0.05% by weight (0.05% by weight or less), more preferably less than 0.01% by weight (0.01% by weight or less), even more preferably less than 0.001% by weight (0.001% by weight or less), and particularly preferably less than 0.0001% by weight (0.0001% by weight or less). The sheet of this embodiment is not compounded with the binder, and thus, when the sheet is used as the sealing material, sealability is high, and outgasing is not caused.

(Content of Iron)

In the sheet of this embodiment and the sealing material including the sheet described above, the content of iron is small. Specifically, when the weight of the entire sheet is 100% by weight, the content of iron in terms of iron oxide ($Fe_2O_3$) contained in the sheet of this embodiment and the sealing material including the sheet described above is 6% by weight or less, preferably 3% by weight or less, more preferably 2% by weight or less, even more preferably 1.5% by weight or less, still even more preferably 1.0% by weight or less, and particularly preferably 0.8% by weight or less.

(Content of Alumina)

When the weight of the entire sheet is 100% by weight, the content of alumina contained in the sheet of this embodiment and the sealing material including the sheet described above is 16% by weight or more.

The sheet of this embodiment and the sealing material including the sheet described above have a low iron content, compared to vermiculite-based and phlogopite-based sheets, and thus, have a high insulating property. Therefore, the sheet of this embodiment and the sealing material including the sheet described above can be used for a fuel battery such as a solid oxide fuel battery (SOFC) and an electrolysis cell such as a solid oxide electrolysis cell (SOEC), which are required to have a high insulating property.

(Basis Weight)

The basis weight of the sheet of this embodiment and the sealing material including the sheet described above is preferably 700 to 1300 g/m$^2$, more preferably 700 to 1200 g/m$^2$, even more preferably 750 to 1100 g/m$^2$, and particularly preferably 800 to 1050 g/m$^2$.

(Density)

The density of the sealing material of this embodiment at 2 MPa is preferably 0.5 to 2.5 g/cm$^3$, more preferably 1.0 to 2.2 g/cm$^3$, and even more preferably 1.2 to 2.0 g/cm$^3$. In this application, the density of the sealing material can be greater than 1.4 g/cm$^3$. As the density at 2 MPa decreases, it is easier for the sealing material to follow the irregularities of the opposite member when compressed, and leakage from the contact surfaces decreases.

The density of the sealing material of this embodiment at 20 MPa is preferably 0.5 to 2.8 g/cm$^3$, more preferably 1.0 to 2.8 g/cm$^3$, and even more preferably 1.2 to 2.8 g/cm$^3$. In this application, the density of the sealing material can be greater than 1.4 g/cm$^3$. As the density at 20 MPa increases, the sealing material is densed when tightened, and substantial leakage decreases.

(Compression Restorability)

In the sealing material of this embodiment, the value of a compression rate calculated by a method described in Examples is 15% or more, preferably 20% or more, more preferably 25% or more, even more preferably 30% or more, and particularly preferably 40% or more. As the compression rate increases, it is easier for the sealing material to follow the irregularities of the opposite member when compressed, and the leakage from the contact surfaces decreases.

In the sealing material of this embodiment, the value of a restoration rate calculated by a method described in Examples is 5% or more, preferably 6% or more, more preferably 7% or more, even more preferably 8% or more, and particularly preferably 10% or more. As the restoration rate increases, a reactive force when tightened increases, and the leakage from contact surfaces decreases.

(Thermal Dimensional Stability)

The sealing material of this embodiment has high heat resistance, in which specifically, a diameter change rate calculated by a method described in Examples is 10% or less, preferably 8% or less, more preferably 5% or less, even more preferably 3% or less, and particularly preferably 1% or less.

(Volume Resistivity)

The sheet of this embodiment and the sealing material including the sheet described above is excellent in an electrical insulating property in a high-temperature environment. Specifically, in the sheet of this embodiment and the sealing material including the sheet described above, as insulating performance in a high-temperature environment, the value of volume resistivity calculated by a method described in Examples is greater than $2.0 \times 10^6 \ \Omega \cdot$cm in a measurement condition of 600°C and an applied voltage of 100 V, and is $3.8 \times 10^6 \ \Omega \cdot$cm or more in a measurement condition of 600°C and an applied voltage of 300 V.

(Fuel Battery and Electrolysis Cell)

The sealing material of this embodiment has the features as described above, and thus, can be used for a fuel battery. That is, it is possible to provide a fuel battery including the sealing material of this embodiment. As the fuel battery, a planar SOFC is exemplified, but the fuel battery is not limited thereto. In addition, as an electrolysis cell, a solid oxide electrolysis cell (SOEC) is exemplified, but the electrolysis cell is not limited thereto.

<Method for Producing Sealing Material>

A method for producing a sealing material of this embodiment includes a step of incorporating the sheet produced by the method for producing a sheet as a part of a gasket and a packing.

Examples

Hereinafter, the present invention will be described in detail, on the basis of specific examples, but the present invention is not limited thereto.

<1. Production of Swelling Muscovite and Production of Sheet>

[1.1 Production of Swelling Muscovite (Modification of Muscovite)]

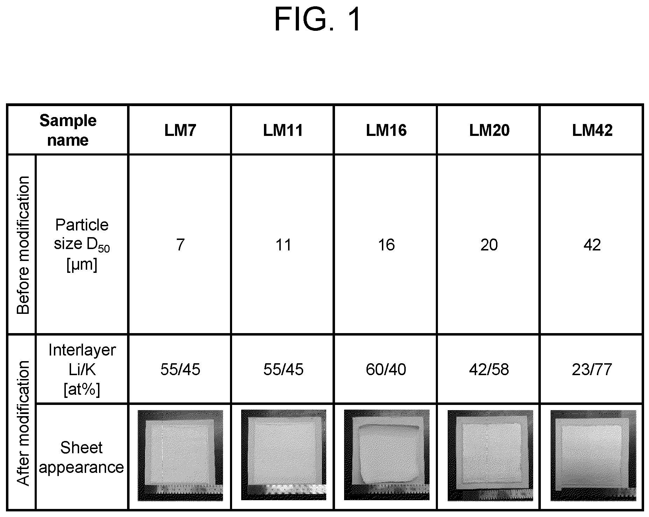

As illustrated in FIG. 1, five types of muscovite with different particle sizes were used. Lithium nitrate of which the weight is 8 times the weight of the muscovite was heated at 370°C and melted, and was mixed with the muscovite. By causing a reaction at 370°C for 40 hours, ion exchange was performed. After that, water was added, and suction filtration was performed. Washing with pure water was performed to cause dechlorination. Pure water was added and stirred to obtain slurry.

[1.2 Production of Sheet]

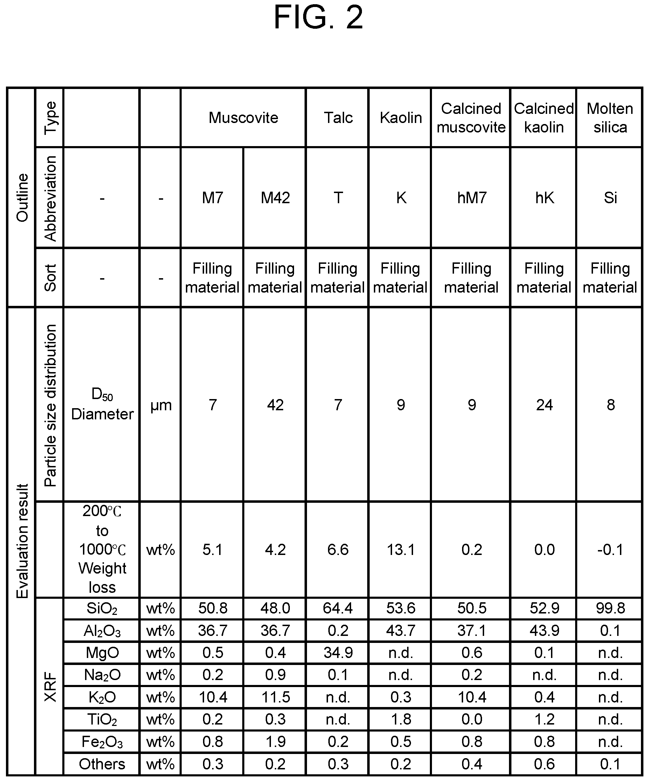

The slurry obtained in [1.1] described above was condensed, and then, was molded with a doctor blade machine, and dried at 100°C for 24 hours to produce a sheet. As the appearance of the sheet is illustrated in FIG. 1, swelling muscovite (modified muscovite) was prepared from the muscovite with different particle sizes, and thus, all the muscovite was capable of being formed into sheets. Interlayer ions were examined by a fluorescent X-ray analysis (XRF). As a result thereof, approximately 20 at% to 60 at% of $K^+$ ions in the interlayer were exchanged with $Li^+$ ions (FIG. 1).
As a first component, LM7, LM11, LM20, and LM42 illustrated in FIG. 1 were used.
As a second component, muscovite before modification (M7 or 42), talc, kaolin, calcined muscovite (calcined M7), calcined kaolin, molten silica, shown in FIG. 2, were used.
The second component was added to the slurry of the first component obtained in [1.1] described above at a predetermined ratio, and mixed to form a mixture. The obtained mixture was condensed, and then, molded with a doctor blade machine, and dried at 100°C for 24 hours to produce sheets of Examples and Comparative Examples. In the sheets of Comparative Examples 2 and 3, swelling vermiculite was used as the first component, instead of the swelling muscovite.
In Comparative Example 4, a commercially available silicone-laminated phlogopite sheet was used.

<2. Evaluation of Sheet>

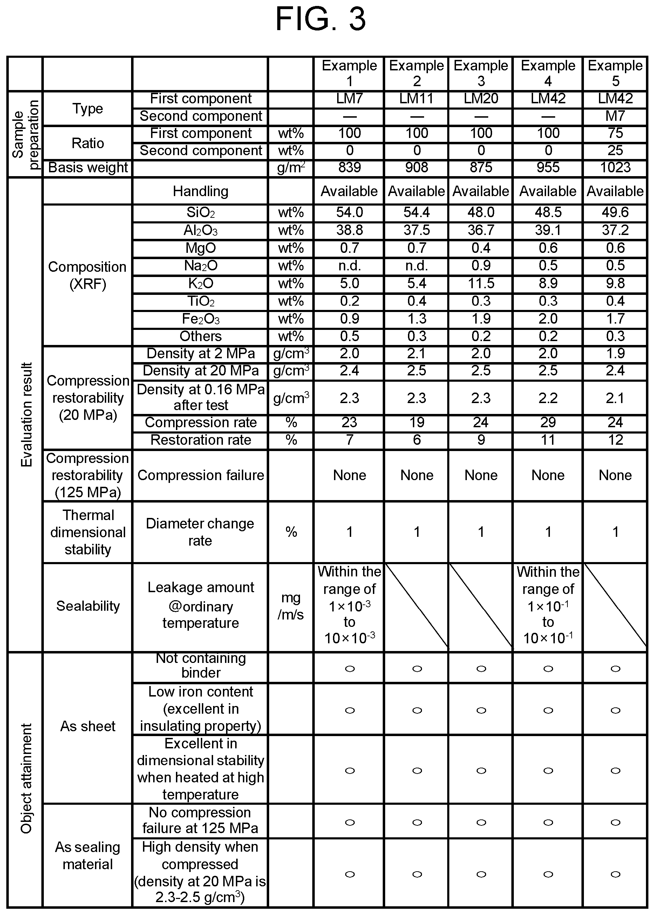

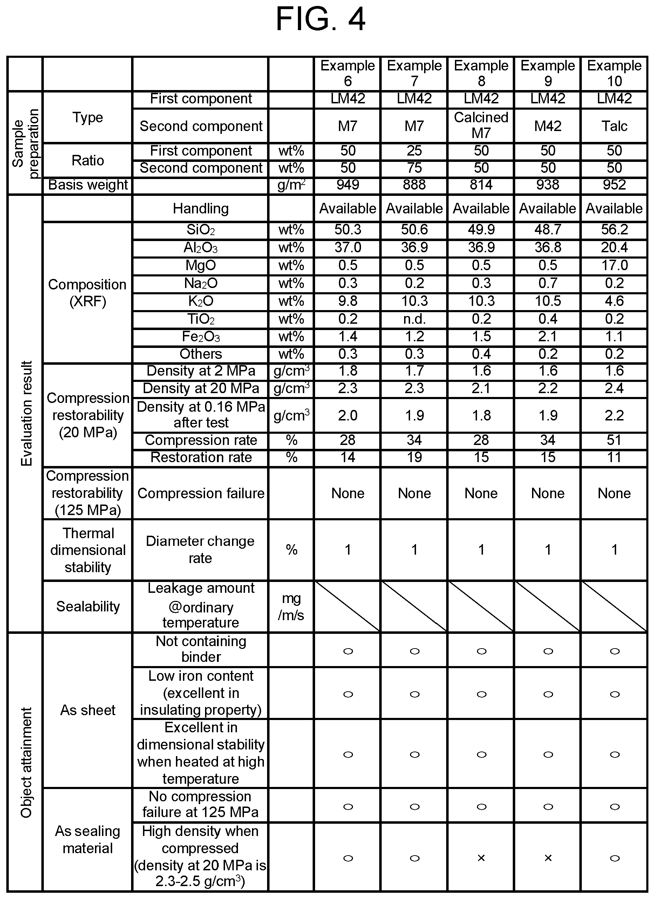

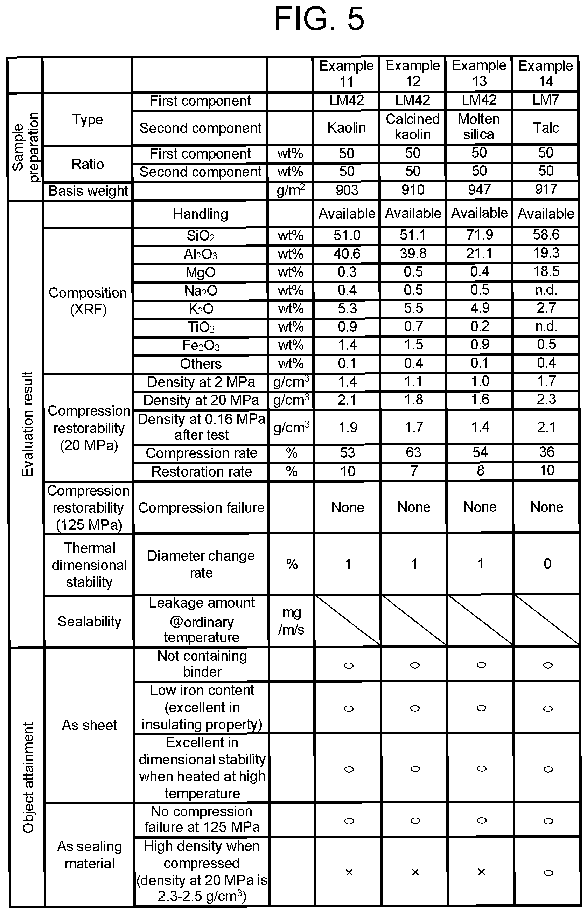

The following evaluation was performed on the sheets of Examples and Comparative Examples. Results are shown in FIG. 3 to FIG. 5.

(Compression Restorability)

The sheet was punched to be a test piece with an outer diameter of 20 mm. The test piece was subjected to a drying treatment at 100°C for 24 hours.
A compression jig provided with three linear gauge sensors at an interval of 120° was set in a universal tester, and the test piece was placed in the center, and a surface pressure of 0.16 MPa was applied. A test force was applied such that a compression velocity was 0.1 MPa per 1 second, and compression was performed until the maximum surface pressure of 20 MPa. After that, the test force was released at the same rate, and restoration was performed until 0.16 MPa.
From a thickness at a surface pressure of 2 MPa (= a thickness at 2 MPa), a thickness at the maximum surface pressure of 20 MPa (= a thickness at 20 MPa), and a thickness at the end of the test at 0.16 MPa (= a thickness at the restoration to 0.16 MPa), a compression rate and a restoration rate were calculated by the following expression.

$$\textbf{Compression Rate } [\%]$$
$$= \frac{\textbf{Thickness } [\textbf{mm}] \textbf{ at 2 MPa} - \textbf{Thickness } [\textbf{mm}] \textbf{ at 20 MPa}}{\textbf{Thickness } [\textbf{mm}] \textbf{ at 2 MPa}}$$

$$\textbf{Restoration Rate } [\%]$$
$$= \frac{\textbf{Thickness } [\textbf{mm}] \textbf{ at Restoration to } 0.16 \textbf{ MPa} - \textbf{Thickness } [\textbf{mm}] \textbf{ at 2 MPa}}{\textbf{Thickness } [\textbf{mm}] \textbf{ at Restoration to } 0.16 \textbf{ MPa}}$$

(Compression Restorability (High Surface Pressure))

The maximum surface pressure was changed to 125 MPa from the case of evaluating a low surface pressure. The other condition was not changed, and the same test was performed. A case where a crack was observed in the sample after the test was set to "Present", and a case where a crack was not observed was set to "Absent".

(Thermal Dimensional Stability)

The sheet was punched to be a test piece with an outer diameter of 20 mm. The test piece was dried at 100°C for 24 hours, and then, left to cool in a desiccator, and the diameter was measured by using a projector (= a diameter after drying). After that, the test piece was heated at 900°C for 24 hours in an electrical muffle furnace (a temperature increase of 200°C/h, a natural temperature decrease), and left to cool. The diameter was measured by using a projector (= a diameter after heating). A diameter change rate was measured by the following expression.

$$\text{\textbf{Diameter Change Rate} }[\%]$$
$$= \frac{\text{\textbf{Diameter} [mm] \textbf{When Drying}} - \text{\textbf{Diameter} [mm] \textbf{after Drying}}}{\text{\textbf{Diameter} [mm] \textbf{When Drying}}}$$

(Sealability)

The sheet was punched to be a ring-shaped test piece with an outer diameter of 92 mm and an inner diameter of 49 mm. The ring-shaped test piece was subjected to a standard state treatment at 24°C and 50%RH for 24 hours.
A leakage amount was measured in the following test condition, with reference to standard EN13555.

· Tester: AMTEC temes fl. ai1
· Gas Type: He
· Internal Pressure: 0.5 MPa
· Surface Pressure: 20 MPa
· Detector: a leak detector

(TG)

The second component was pulverized with a mortar. A weight loss on heating at each temperature was measured in the following condition by using a TG-DTA device, manufactured by Rigaku Corporation.

· Atmosphere: air
· Sample Weight: 10 mg
· Temperature Increase Rate: 5°C/min
· Highest Temperature: 1000°C
· Pan Material: Pt

(Measurement of Volume Resistivity)

Volume resistivity was measured in the following test condition, with reference to Japanese Industrial Standards JIS C2141, JEC-6148, and JIS C2139.

· Temperature: 600°C
· Atmosphere: Atmospheric Air
· Measurement Method

A main electrode, a guard electrode, and counter electrodes were printed on the upper and lower surfaces of a specimen by using a screen printer and a silver paste, and then, subjected to a drying treatment (in the air, 150°C, 12 hours), and then, subjected to a baking treatment (in the air, 700°C, 1 hour, a temperature increase rate of 200°C/h) in an electrical furnace to form each electrode.
Retention was performed at 600°C for 15 minutes, and then, a DC voltage (V) was applied to the specimen, and a current (I) after charging for 1 minute was measured to obtain the volume resistance (Rv) of the specimen, and the volume resistivity (ρv) was calculated from the thickness (t) of the specimen and the electrode area (S) by the following expression.
In a case where the thickness of the specimen is t (cm), the volume resistivity ρv is given by the following expression.

$$\rho_v = \frac{S}{t} \times R_v = \frac{S}{t} \times \frac{V}{I}$$

$$S = \frac{\pi(D_1 + g)^2}{4} = 1.83\ cm^2$$

$$g = \frac{D_2 - D_1}{2} = \frac{1.60 - 1.45}{2} = 0.075 cm$$

$\rho_v$ : Volume Resistivity ($\Omega \cdot$cm)
t : Thickness of Specimen (cm)
S : Electrode effective Area (cm$^2$)
$R_v$ : Volume Resistance ($\Omega$)
g : Electrode Gap Interval (cm)
$D_1$ : Diameter of Main Electrode (cm)
$D_2$ : Diameter of Guard Electrode (cm)

(Result)

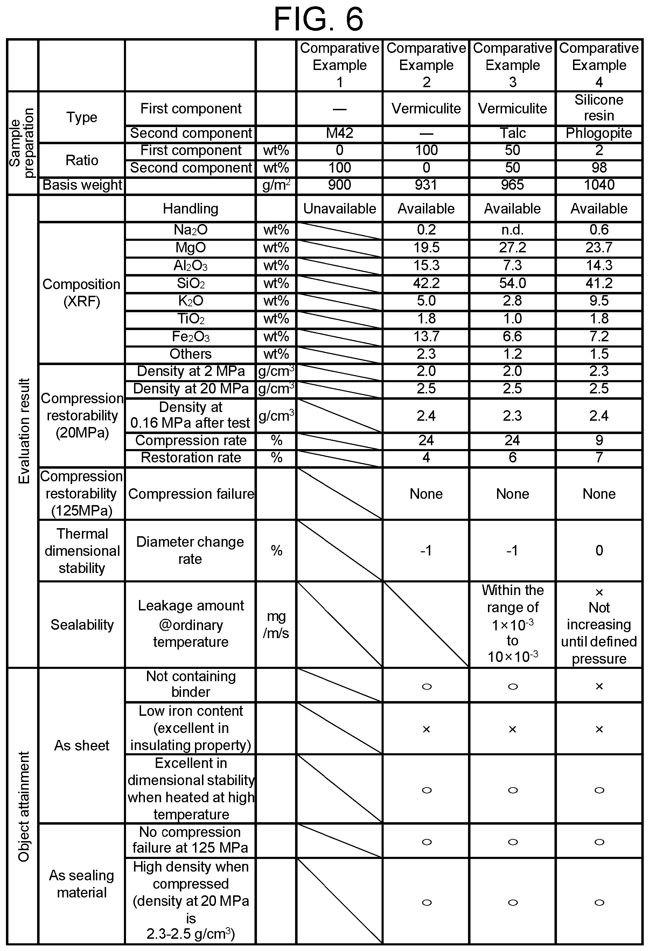

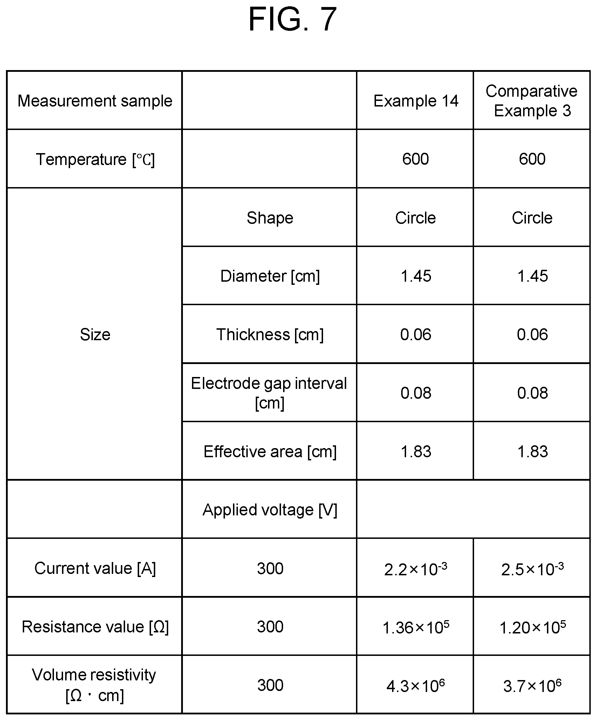

From results shown in FIG. 3 to FIG. 7, the following results were checked.

The sheets of Examples contain the first component (swelling muscovite) and the second component (a filling material) as a main component, and do not contain fluorine and a resin such as a binder, and thus, are less likely to cause outgasing.

The sheets of Examples have a low iron content of 2.1% by weight or less, and thus, have a high insulating property. Specifically, in the sheets of Examples, the value of the volume resistivity was $3.8 \times 10^6$ $\Omega \cdot$cm or more in a measurement condition of 600°C and an applied voltage of 300 V, and insulating performance in a high-temperature environment was excellent. Therefore, the sheets of Examples can be used for a fuel battery and an electrolysis cell required to have a high insulating property.

For the thermal dimensional stability, it was found that the sheets of Examples did not significantly contract even when heated at 900°C, and thus, have sufficient heat resistance as a sheet for high-temperature application.

It was found that the sheets of Examples have high heat resistance from the fact that a clay phase remains even when heated at 900°C.

In a case where a calcined filling material is used as the second component, it is expected that a weight loss amount when heated decreases, and thus, heat resistance is improved.

In the sheet of Comparative Example 1, the sheet was not capable of being obtained (handling was not available), and thus, it was found that the sheet can be obtained by modifying the muscovite.

It was checked that as an effect of adding the second component (the filling material), the initial thickness (density) can be controlled, and a compression amount is adjusted.

It was indicated that as a result of evaluating the compression restorability (125 MPa), breakdown behavior is not observed in the sheets of Examples even when applying a high surface pressure, and the sheets have a sufficient strength when used as the sealing material.

It was found that the sheets of Examples can be used as the sealing material having a high density when compressed (a density at 20 MPa of 2.1 to 2.5 g/cm$^3$) and low substantial leakage.

The sheets of Examples had sufficient sealability when used as the sealing material from the result of a sealing test.

In contrast, the sheets of Comparative Examples had a high iron content (Comparative Examples 2 to 4).

Note that the present invention is created with reference to the following technologies and problems of the related art, which are not the essential elements of the present invention, but as necessary, can be appropriately incorporated.

In a sheet using non-swellable clay of the related art or a sealing material using the sheet described above, an organic or inorganic fiber and a binder were added.

In PATENT LITERATURE 3, a sealing material containing mica as non-swellable clay, in which an organic fiber and a binder are compounded, is described. In PATENT LITERATURES 4 and 5, a sealing material containing talc as non-swellable clay, in which an inorganic fiber and a binder are compounded, is described. In PATENT LITERATURE 6, a sheet containing fluor-tetrasilisic mica as swellable clay is described. In PATENT LITERATURE 7, a sealing material using a sheet containing fluor-tetrasilisic mica as swellable clay is described.

The sealing material containing the non-swellable clay, the fiber, and the binder described in PATENT LITERATURES 3 to 5 contained the fiber, and thus, the sealability was insufficient. In addition, in a case where an organic binder or an organic fiber is used, an organic content is burned down to generate voids in a high-temperature environment, and thus, the sealability is degraded. In addition, silicone was used as the inorganic binder, siloxane-based outgasing was caused in a high-temperature environment, and thus, the sealing material was not capable of being used in the vicinity of an electronic part or an electrode. The fluorine mica described in PATENT LITERATURES 6 and 7 can be the sheet without using a fiber and a binder, and has sealability in a high-temperature environment. However, there was a possibility that a slight amount of fluorine-based gas is generated in a high-temperature environment, and thus, there was restriction on use in the vicinity of an electronic part and an electrode.

In PATENT LITERATURE 8, a sheet containing montmorillonite that is one type of smectite as the swellable clay, and a sealing material using the sheet described above are described. In PATENT LITERATURES 9 to 11, it is described that clay can be modified by a reaction between a molten salt, a concentrated aqueous solution, and the like.

The smectite described in PATENT LITERATURE 8 can be the sheet without using a fiber and a binder. However, there was a problem that warpage or significant contraction occurs in a high-temperature environment, and there was a problem in dimensional stability. In addition, the sheet was gelled at a comparatively low concentration when produced, and thus, warpage was likely to occur when dried, and there was a problem in the moldability of a thick film. In PATENT LITERATURES 9 to 11, it is described that the clay can be modified by the reaction between the molten salt, the concentrated aqueous solution, and the like. However, the application of the technologies of such literatures was limited to the preparation of a clay dispersion liquid, compounding with a polymer, and mixing with a resin.

**Claims**

1. A sheet, comprising

   a first component as a main component,
   wherein the first component is clay,
   a diameter change rate is 10% or less, as thermal dimensional stability, and
   when a weight of the entire sheet is 100% by weight, a content of iron oxide is 6% by weight or less.

2. The sheet according to claim 1,

   wherein the sheet contains the first component, and a second component optionally,
   the first component is swelling clay,
   the second component is a filling material,
   when the weight of the entire sheet is 100% by weight, a sum of the first component and the second component is 90% by weight or more, and
   the first component : the second component = 20 : 80 to 100 : 0 is set.

3. The sheet according to claim 1,
   wherein the first component is swelling muscovite.

4. The sheet according to claim 1,
   wherein when the weight of the entire sheet is 100% by weight, a content of alumina is 16% by weight or more.

5. The sheet according to claim 1 or 2,
   wherein the swelling clay is swelling muscovite, and in the swelling muscovite, at least a part of $K^+$ ions in an interlayer of the muscovite is exchanged with $Li^+$ ions.

6. The sheet according to claim 2,
   wherein the second component is a filling material of clay or an oxide.

7. The sheet according to claim 2,
   wherein in the second component, a volume-based cumulative 50% particle size ($D_{50}$) measured by a laser diffraction/scattering particle size distribution analyzer is 5 to 50 $\mu$m.

8. The sheet according to claim 1 or 2,
   wherein a content of a binder is 0.1% by weight or less.

9. The sheet according to claim 1 or 2,
   wherein when the weight of the entire sheet is 100% by weight, the content of the iron oxide is 3% by weight or less.

10. A sealing material, comprising
the sheet according to any one of claims 1 to 9.

11. The sealing material according to claim 10,
wherein the sealing material is for a fuel battery or an electrolysis cell.

12. A fuel battery or an electrolysis cell, comprising
the sealing material according to claim 11.

13. A method for producing the sheet according to any one of claims 1 to 9, comprising
a step of mixing the first component and the second component to form a mixture.

14. A method for producing a sealing material, comprising
a step of incorporating the sheet produced by the method for producing the sheet according to claim 13 as a part of a gasket or a packing.

# FIG. 1

| | Sample name | LM7 | LM11 | LM16 | LM20 | LM42 |
|---|---|---|---|---|---|---|
| Before modification | Particle size $D_{50}$ [μm] | 7 | 11 | 16 | 20 | 42 |
| After modification | Interlayer Li/K [at%] | 55/45 | 55/45 | 60/40 | 42/58 | 23/77 |
| | Sheet appearance | | | | | |

# FIG. 2

| | Type | | | Muscovite | | Talc | Kaolin | Calcined muscovite | Calcined kaolin | Molten silica |
|---|---|---|---|---|---|---|---|---|---|---|
| **Outline** | Abbreviation | - | - | M7 | M42 | T | K | hM7 | hK | Si |
| | Sort | - | - | Filling material | Filling material | Filling material | Filling material | Filling material | Filling material | Filling material |
| **Evaluation result** | Particle size distribution | $D_{50}$ Diameter | μm | 7 | 42 | 7 | 9 | 9 | 24 | 8 |
| | | 200°C to 1000°C Weight loss | wt% | 5.1 | 4.2 | 6.6 | 13.1 | 0.2 | 0.0 | -0.1 |
| | XRF | $SiO_2$ | wt% | 50.8 | 48.0 | 64.4 | 53.6 | 50.5 | 52.9 | 99.8 |
| | | $Al_2O_3$ | wt% | 36.7 | 36.7 | 0.2 | 43.7 | 37.1 | 43.9 | 0.1 |
| | | MgO | wt% | 0.5 | 0.4 | 34.9 | n.d. | 0.6 | 0.1 | n.d. |
| | | $Na_2O$ | wt% | 0.2 | 0.9 | 0.1 | n.d. | 0.2 | n.d. | n.d. |
| | | $K_2O$ | wt% | 10.4 | 11.5 | n.d. | 0.3 | 10.4 | 0.4 | n.d. |
| | | $TiO_2$ | wt% | 0.2 | 0.3 | n.d. | 1.8 | 0.0 | 1.2 | n.d. |
| | | $Fe_2O_3$ | wt% | 0.8 | 1.9 | 0.2 | 0.5 | 0.8 | 0.8 | n.d. |
| | | Others | wt% | 0.3 | 0.2 | 0.3 | 0.2 | 0.4 | 0.6 | 0.1 |

# FIG. 3

| | | | | Example 1 | Example 2 | Example 3 | Example 4 | Example 5 |
|---|---|---|---|---|---|---|---|---|
| Sample preparation | Type | First component | | LM7 | LM11 | LM20 | LM42 | LM42 |
| | | Second component | | — | — | — | — | M7 |
| | Ratio | First component | wt% | 100 | 100 | 100 | 100 | 75 |
| | | Second component | wt% | 0 | 0 | 0 | 0 | 25 |
| | Basis weight | | g/m² | 839 | 908 | 875 | 955 | 1023 |
| Evaluation result | | Handling | | Available | Available | Available | Available | Available |
| | Composition (XRF) | $SiO_2$ | wt% | 54.0 | 54.4 | 48.0 | 48.5 | 49.6 |
| | | $Al_2O_3$ | wt% | 38.8 | 37.5 | 36.7 | 39.1 | 37.2 |
| | | MgO | wt% | 0.7 | 0.7 | 0.4 | 0.6 | 0.6 |
| | | $Na_2O$ | wt% | n.d. | n.d. | 0.9 | 0.5 | 0.5 |
| | | $K_2O$ | wt% | 5.0 | 5.4 | 11.5 | 8.9 | 9.8 |
| | | $TiO_2$ | wt% | 0.2 | 0.4 | 0.3 | 0.3 | 0.4 |
| | | $Fe_2O_3$ | wt% | 0.9 | 1.3 | 1.9 | 2.0 | 1.7 |
| | | Others | wt% | 0.5 | 0.3 | 0.2 | 0.2 | 0.3 |
| | Compression restorability (20 MPa) | Density at 2 MPa | g/cm³ | 2.0 | 2.1 | 2.0 | 2.0 | 1.9 |
| | | Density at 20 MPa | g/cm³ | 2.4 | 2.5 | 2.5 | 2.5 | 2.4 |
| | | Density at 0.16 MPa after test | g/cm³ | 2.3 | 2.3 | 2.3 | 2.2 | 2.1 |
| | | Compression rate | % | 23 | 19 | 24 | 29 | 24 |
| | | Restoration rate | % | 7 | 6 | 9 | 11 | 12 |
| | Compression restorability (125 MPa) | Compression failure | | None | None | None | None | None |
| | Thermal dimensional stability | Diameter change rate | % | 1 | 1 | 1 | 1 | 1 |
| | Sealability | Leakage amount @ordinary temperature | mg /m/s | Within the range of $1\times10^{-3}$ to $10\times10^{-3}$ | \ | \ | Within the range of $1\times10^{-1}$ to $10\times10^{-1}$ | \ |
| Object attainment | As sheet | Not containing binder | | ○ | ○ | ○ | ○ | ○ |
| | | Low iron content (excellent in insulating property) | | ○ | ○ | ○ | ○ | ○ |
| | | Excellent in dimensional stability when heated at high temperature | | ○ | ○ | ○ | ○ | ○ |
| | As sealing material | No compression failure at 125 MPa | | ○ | ○ | ○ | ○ | ○ |
| | | High density when compressed (density at 20 MPa is 2.3-2.5 g/cm³) | | ○ | ○ | ○ | ○ | ○ |

# FIG. 4

| | | | | Example 6 | Example 7 | Example 8 | Example 9 | Example 10 |
|---|---|---|---|---|---|---|---|---|
| Sample preparation | Type | First component | | LM42 | LM42 | LM42 | LM42 | LM42 |
| | | Second component | | M7 | M7 | Calcined M7 | M42 | Talc |
| | Ratio | First component | wt% | 50 | 25 | 50 | 50 | 50 |
| | | Second component | wt% | 50 | 75 | 50 | 50 | 50 |
| | Basis weight | | g/m² | 949 | 888 | 814 | 938 | 952 |
| Evaluation result | | Handling | | Available | Available | Available | Available | Available |
| | Composition (XRF) | $SiO_2$ | wt% | 50.3 | 50.6 | 49.9 | 48.7 | 56.2 |
| | | $Al_2O_3$ | wt% | 37.0 | 36.9 | 36.9 | 36.8 | 20.4 |
| | | MgO | wt% | 0.5 | 0.5 | 0.5 | 0.5 | 17.0 |
| | | $Na_2O$ | wt% | 0.3 | 0.2 | 0.3 | 0.7 | 0.2 |
| | | $K_2O$ | wt% | 9.8 | 10.3 | 10.3 | 10.5 | 4.6 |
| | | $TiO_2$ | wt% | 0.2 | n.d. | 0.2 | 0.4 | 0.2 |
| | | $Fe_2O_3$ | wt% | 1.4 | 1.2 | 1.5 | 2.1 | 1.1 |
| | | Others | wt% | 0.3 | 0.3 | 0.4 | 0.2 | 0.2 |
| | Compression restorability (20 MPa) | Density at 2 MPa | g/cm³ | 1.8 | 1.7 | 1.6 | 1.6 | 1.6 |
| | | Density at 20 MPa | g/cm³ | 2.3 | 2.3 | 2.1 | 2.2 | 2.4 |
| | | Density at 0.16 MPa after test | g/cm³ | 2.0 | 1.9 | 1.8 | 1.9 | 2.2 |
| | | Compression rate | % | 28 | 34 | 28 | 34 | 51 |
| | | Restoration rate | % | 14 | 19 | 15 | 15 | 11 |
| | Compression restorability (125 MPa) | Compression failure | | None | None | None | None | None |
| | Thermal dimensional stability | Diameter change rate | % | 1 | 1 | 1 | 1 | 1 |
| | Sealability | Leakage amount @ordinary temperature | mg /m/s | / | / | / | / | / |
| Object attainment | As sheet | Not containing binder | | ○ | ○ | ○ | ○ | ○ |
| | | Low iron content (excellent in insulating property) | | ○ | ○ | ○ | ○ | ○ |
| | | Excellent in dimensional stability when heated at high temperature | | ○ | ○ | ○ | ○ | ○ |
| | As sealing material | No compression failure at 125 MPa | | ○ | ○ | ○ | ○ | ○ |
| | | High density when compressed (density at 20 MPa is 2.3-2.5 g/cm³) | | ○ | ○ | × | × | ○ |

# FIG. 5

| | | | | Example 11 | Example 12 | Example 13 | Example 14 |
|---|---|---|---|---|---|---|---|
| Sample preparation | Type | First component | | LM42 | LM42 | LM42 | LM7 |
| | | Second component | | Kaolin | Calcined kaolin | Molten silica | Talc |
| | Ratio | First component | wt% | 50 | 50 | 50 | 50 |
| | | Second component | wt% | 50 | 50 | 50 | 50 |
| | Basis weight | | g/m$^2$ | 903 | 910 | 947 | 917 |
| Evaluation result | | Handling | | Available | Available | Available | Available |
| | Composition (XRF) | SiO$_2$ | wt% | 51.0 | 51.1 | 71.9 | 58.6 |
| | | Al$_2$O$_3$ | wt% | 40.6 | 39.8 | 21.1 | 19.3 |
| | | MgO | wt% | 0.3 | 0.5 | 0.4 | 18.5 |
| | | Na$_2$O | wt% | 0.4 | 0.5 | 0.5 | n.d. |
| | | K$_2$O | wt% | 5.3 | 5.5 | 4.9 | 2.7 |
| | | TiO$_2$ | wt% | 0.9 | 0.7 | 0.2 | n.d. |
| | | Fe$_2$O$_3$ | wt% | 1.4 | 1.5 | 0.9 | 0.5 |
| | | Others | wt% | 0.1 | 0.4 | 0.1 | 0.4 |
| | Compression restorability (20 MPa) | Density at 2 MPa | g/cm$^3$ | 1.4 | 1.1 | 1.0 | 1.7 |
| | | Density at 20 MPa | g/cm$^3$ | 2.1 | 1.8 | 1.6 | 2.3 |
| | | Density at 0.16 MPa after test | g/cm$^3$ | 1.9 | 1.7 | 1.4 | 2.1 |
| | | Compression rate | % | 53 | 63 | 54 | 36 |
| | | Restoration rate | % | 10 | 7 | 8 | 10 |
| | Compression restorability (125 MPa) | Compression failure | | None | None | None | None |
| | Thermal dimensional stability | Diameter change rate | % | 1 | 1 | 1 | 0 |
| | Sealability | Leakage amount @ordinary temperature | mg /m/s | | | | |
| Object attainment | As sheet | Not containing binder | | ○ | ○ | ○ | ○ |
| | | Low iron content (excellent in insulating property) | | ○ | ○ | ○ | ○ |
| | | Excellent in dimensional stability when heated at high temperature | | ○ | ○ | ○ | ○ |
| | As sealing material | No compression failure at 125 MPa | | ○ | ○ | ○ | ○ |
| | | High density when compressed (density at 20 MPa is 2.3-2.5 g/cm$^3$) | | × | × | × | ○ |

EP 4 564 487 A1

## FIG. 6

| | | | Unit | Comparative Example 1 | Comparative Example 2 | Comparative Example 3 | Comparative Example 4 |
|---|---|---|---|---|---|---|---|
| Sample preparation | Type | First component | | — | Vermiculite | Vermiculite | Silicone resin |
| | | Second component | | M42 | — | Talc | Phlogopite |
| | Ratio | First component | wt% | 0 | 100 | 50 | 2 |
| | | Second component | wt% | 100 | 0 | 50 | 98 |
| | Basis weight | | g/m² | 900 | 931 | 965 | 1040 |
| Evaluation result | | Handling | | Unavailable | Available | Available | Available |
| | Composition (XRF) | Na₂O | wt% | | 0.2 | n.d. | 0.6 |
| | | MgO | wt% | | 19.5 | 27.2 | 23.7 |
| | | Al₂O₃ | wt% | | 15.3 | 7.3 | 14.3 |
| | | SiO₂ | wt% | | 42.2 | 54.0 | 41.2 |
| | | K₂O | wt% | | 5.0 | 2.8 | 9.5 |
| | | TiO₂ | wt% | | 1.8 | 1.0 | 1.8 |
| | | Fe₂O₃ | wt% | | 13.7 | 6.6 | 7.2 |
| | | Others | wt% | | 2.3 | 1.2 | 1.5 |
| | Compression restorability (20MPa) | Density at 2 MPa | g/cm³ | | 2.0 | 2.0 | 2.3 |
| | | Density at 20 MPa | g/cm³ | | 2.5 | 2.5 | 2.5 |
| | | Density at 0.16 MPa after test | g/cm³ | | 2.4 | 2.3 | 2.4 |
| | | Compression rate | % | | 24 | 24 | 9 |
| | | Restoration rate | % | | 4 | 6 | 7 |
| | Compression restorability (125MPa) | Compression failure | | | None | None | None |
| | Thermal dimensional stability | Diameter change rate | % | | -1 | -1 | 0 |
| | Sealability | Leakage amount @ordinary temperature | mg/m/s | | | Within the range of 1×10⁻³ to 10×10⁻³ | × Not increasing until defined pressure |
| Object attainment | As sheet | Not containing binder | | | ○ | ○ | × |
| | | Low iron content (excellent in insulating property) | | | × | × | × |
| | | Excellent in dimensional stability when heated at high temperature | | | ○ | ○ | ○ |
| | As sealing material | No compression failure at 125 MPa | | | ○ | ○ | ○ |
| | | High density when compressed (density at 20 MPa is 2.3-2.5 g/cm³) | | | ○ | ○ | ○ |

19

# FIG. 7

| Measurement sample | | Example 14 | Comparative Example 3 |
|---|---|---|---|
| Temperature [°C] | | 600 | 600 |
| Size | Shape | Circle | Circle |
| | Diameter [cm] | 1.45 | 1.45 |
| | Thickness [cm] | 0.06 | 0.06 |
| | Electrode gap interval [cm] | 0.08 | 0.08 |
| | Effective area [cm] | 1.83 | 1.83 |
| | Applied voltage [V] | | |
| Current value [A] | 300 | $2.2 \times 10^{-3}$ | $2.5 \times 10^{-3}$ |
| Resistance value [Ω] | 300 | $1.36 \times 10^{5}$ | $1.20 \times 10^{5}$ |
| Volume resistivity [Ω · cm] | 300 | $4.3 \times 10^{6}$ | $3.7 \times 10^{6}$ |

## INTERNATIONAL SEARCH REPORT

| International application No. |
| --- |
| **PCT/JP2023/027638** |

**A. CLASSIFICATION OF SUBJECT MATTER**

*H01M 8/0282*(2016.01)i; *C01B 33/42*(2006.01)i; *C09K 3/10*(2006.01)i; *C25B 13/05*(2021.01)i; *F16J 15/06*(2006.01)i; *H01M 8/0273*(2016.01)i; *H01M 8/0286*(2016.01)i; *H01M 8/12*(2016.01)i

FI: H01M8/0282; C01B33/42; C09K3/10 Q; C25B13/05; F16J15/06 B; H01M8/0273; H01M8/0286; H01M8/12 101; H01M8/12 102A

According to International Patent Classification (IPC) or to both national classification and IPC

**B. FIELDS SEARCHED**

Minimum documentation searched (classification system followed by classification symbols)

H01M8/0282; C01B33/42; C09K3/10; C25B13/05; F16J15/06; H01M8/0273; H01M8/0286; H01M8/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-503030 A (SAINT-GOBAIN CERAMICS & PLASTICS, INC.) 31 January 2019 (2019-01-31)<br>paragraphs [0011]-[0018], fig. 11 | 1, 4, 8-14 |
| X | JP 2002-020115 A (IND. TECHNOL. RES. INST.) 23 January 2002 (2002-01-23)<br>paragraphs [0011]-[0037] | 1-9, 13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027638**

| Patent document cited in search report | | | Publication date (day/month/year) | Patent family member(s) | | | Publication date (day/month/year) |
|---|---|---|---|---|---|---|---|
| JP | 2019-503030 | A | 31 January 2019 | US paragraphs [0023]-[0030], fig. 11 WO KR | 2018/0331384 2017/083743 10-2018-0064566 | A1 A1 A | |
| JP | 2002-020115 | A | 23 January 2002 | TW | 460427 | B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3325340 A
- JP 4745691 B
- JP 58009955 A
- WO 2017115399 A
- JP 2015535911 A
- JP H78724 B
- JP 6754746 B
- JP 3855003 B
- JP 3468747 B
- JP 2007254188 A
- JP 2017071512 A